(19) Europäisches Patentamt
European Patent Office
Office européen des brevets

(11) **EP 4 446 497 A1**

(12) **EUROPEAN PATENT APPLICATION**
published in accordance with Art. 153(4) EPC

(43) Date of publication:
**16.10.2024 Bulletin 2024/42**

(21) Application number: **22904200.7**

(22) Date of filing: **06.12.2022**

(51) International Patent Classification (IPC):
**D06N 3/00** (2006.01)     **B32B 5/02** (2006.01)
**D04H 3/011** (2012.01)     **D04H 3/016** (2012.01)

(52) Cooperative Patent Classification (CPC):
**B32B 5/02; D04H 3/011; D04H 3/016; D06N 3/00**

(86) International application number:
**PCT/JP2022/044801**

(87) International publication number:
**WO 2023/106272 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2021   JP 2021199533**

(71) Applicant: **Kuraray Co., Ltd.
Kurashiki-shi, Okayama 710-0801 (JP)**

(72) Inventors:
• **IWAMOTO, Akihisa
Okayama-shi, Okayama 702-8601 (JP)**
• **MEGURO, Masashi
Okayama-shi, Okayama 702-8601 (JP)**
• **HISHIDA, Hiroyuki
Okayama-shi, Okayama 702-8601 (JP)**

(74) Representative: **Vossius & Partner
Patentanwälte Rechtsanwälte mbB
Siebertstrasse 3
81675 München (DE)**

(54) **NAPPED ARTIFICIAL LEATHER AND METHOD FOR PRODUCING NAPPED ARTIFICIAL LEATHER**

(57)     Provided are a napped artificial leather which can restrain spontaneous elongation during the production process, enables the constant load elongation transverse/machine ratio to be set to an appropriate value even without a scrim or a liner, and is excellent in pilling resistance and appearance, and a method of producing the napped artificial leather. The napped artificial leather includes a nonwoven fabric which is an entangled body of microfine fibers, and a high-molecular elastic body attached to the nonwoven fabric, has a napped surface formed by napping the microfine fiber on at least one surface, and satisfies the following conditions (1) and (2): (1) the nonwoven fabric is composed of microfine polyester filaments and (2) the fiber density D1 in the transverse direction is from 150 to 450 fibers/mm$^2$, the fiber density D2 in the machine direction is from 150 to 450 fibers/mm$^2$, and D1/D2 is from 0.7 to 1.1.

Fig. 1

EP 4 446 497 A1

**Description**

Technical Field

The present invention relates to a napped artificial leather and a method of producing a napped artificial leather.

Background Art

So far, a napped artificial leather such as suede-like artificial leather or a nubuck-like artificial leather is known. The napped artificial leather has a napped surface including napped fibers, which is formed by subjecting a nonwoven fabric, which a high-molecular elastic body is impregnated into and attached to, to a napping treatment. The napped artificial leather is required for stretching to some extent in the viewpoint of improvement in the shape-following property, durability, and feeling in use, or the like.

PTL 1 discloses an elastically stretchable artificial leather satisfying the specific conditions on a strength elongation characteristic in the machine direction. It is disclosed therein that the elastically stretchable artificial leather exhibits a moderate feel of resistance to further stretching in the machine direction, a good processability and an excellent shape stability after processing, and can keep the round feel of raw material when bending and have a touch with dense feel.

PTL 2 discloses an artificial leather having a scrim which is a fabric composed of the specific multi-filaments, wherein the scrim has a specific weaving density, and the artificial leather has a specific breaking elongation and a specific elongation at the constant load. It is disclosed therein that the artificial leather is broad in width and good in followability to complicated shapes, and can be used suitably as a sheet skin material or an interior material for interiors, automobiles, aircrafts, railroad vehicles, or the like.

Citation List

Patent Literature

PTL 1: JP 2013-194327 A

PTL 2: JP 2017-137588 A

Summary of Invention

Technical Problem

However, the conventional artificial leather has such a problem that, during the production procedure of the artificial leather, spontaneous elongation is caused to cause the sides of the sheet in the process of the production to hang down, thereby causing the friction to the production apparatus, the peripheral material, or the like, so that it becomes hard to ensure a good productivity.

With respect to the elastically stretchable artificial leather described in PTL 1, the ratio of the elongation at a constant load in the transverse direction and the elongation at a constant load in the machine direction (hereinafter sometimes referred to as "constant load elongation transverse/machine ratio") is not controlled appropriately. Therefore, at the production of the artificial leather, there is a possibility of causing such a problem that wrinkles are caused. For adjusting the constant load elongation transverse/machine ratio to an appropriate value, the case where the tentering ratio at the production step, especially at the step of preparing a nonwoven fabric, is increased has such a problem that the interval between fibers becomes too broad and the binding force of fibers becomes weak so that pilling is easily caused, or fibers in the vicinity of the surface become sparse so that a urethane is exposed to the surface, and color unevenness so-called "memuki" in Japanese is generated to impair the appearance.

With respect to the artificial leather including a scrim or lined with fibers, the presence of the scrim or lining fibers facilitates the adjustment of the constant load elongation transverse/machine ratio to an appropriate value. However, the case where the artificial leather including a scrim or a liner is processed into a complicated shape such as a punching leather has such a problem that the scrim or the lining fibers are exposed on the surface portion, thereby impairing the appearance remarkably. Further, even if the artificial leather is one having stretchability to some extent, there is such a problem that when it is tried to be processed into a complicated shape by vacuum molding etc., the presence of the scrim or the liner causes the return, thereby making it impossible to process the artificial leather into a complicated shape.

Accordingly, an object of the present invention is to provide a napped artificial leather which can restrain spontaneous elongation during the production process, enables the constant load elongation transverse/machine ratio to set to an appropriate value even without a scrim or a liner, and is excellent in pilling resistance and appearance.

Solution to Problem

Namely, the present invention includes the following inventions.

[1] A napped artificial leather including: a nonwoven fabric which is an entangled body of microfine fibers; and a high-molecular elastic body attached to the nonwoven fabric, the napped artificial leather having a napped surface formed by napping the microfine fibers on at least one surface, and satisfying the following conditions (1) and (2):

(1) the nonwoven fabric is composed of microfine polyester filaments, and
(2) the fiber density D1 in the transverse direction is from 150 to 450 fibers/mm$^2$, the fiber density D2 in the machine direction is from 150 to 450 fibers/mm$^2$, and D1/D2 is from 0.7 to 1.1.

[2] The napped artificial leather according to [1], further satisfying the following condition (3):
(3) $0.3 \leq L1/L2 \leq 3.5$ where L1 is an elongation in the transverse direction at a constant load of 110.8N and L2 is an elongation in the machine direction at a constant load of 110.8N.
[3] The napped artificial leather according to [1] or [2], wherein the high-molecular elastic body is included in an amount of from 15 to 40% by mass based on the total mass of the high-molecular elastic body and the nonwoven fabric.
[4] The napped artificial leather according to any one of [1] to [3], wherein the breaking elongation in the machine direction, which is measured according to Method A in 8.14.1 of JIS L 1096 (1999), is 60% or more.
[5] The napped artificial leather according to any one of [1] to [4], wherein the breaking elongation in the transverse direction, which is measured according to Method A in 8.14.1 of JIS L 1096 (1999), is 60% or more.
[6] A method of producing a napped artificial leather according to any one of [1] to [5], including the following steps (i) to (iii):

(i) a step of preparing a nonwoven fabric, which includes shrinking, in a hot water, a web-entangled sheet composed of a stacked body of fiber webs each obtained by melt spinning a polyester resin which is an island component and a second resin which is a sea component, and moving and drying the resultant, while tentering the resultant to widen the resultant in the direction perpendicular to the conveying direction
(ii) a step of preparing a composite, which includes impregnating the nonwoven fabric with a solution containing a high-molecular elastic body, solidifying the high-molecular elastic body, and then dissolving the second resin in a solution to remove the second resin, thereby preparing a composite where the high-molecular elastic body is attached to the nonwoven fabric,
(iii) a step of preparing a napped artificial leather, which includes half-cutting the composite, and subjecting at least one surface of the obtained half-cut material to a grinding treatment, thereby preparing a napped artificial leather.

[7] The method of producing a napped artificial leather according to [6], wherein the step (i) includes shrinking the web-entangled sheet in a hot water, moving and drying the resultant, while tentering the resultant to widen the resultant in the direction perpendicular to the conveying direction such that the tentering rate W1 is from 6 to 17%, thereby preparing a heat-shrunk web-entangled sheet.
[8] The method of producing a napped artificial leather according to [6] or [7], wherein the step (ii) includes moving and drying the nonwoven fabric, while tentering the nonwoven fabric to widen the nonwoven fabric in the direction perpendicular to the conveying direction, thereby preparing the composite.
[9] The method of producing a napped artificial leather according to [8], wherein the step (iii) includes subjecting at least one surface of the half-cut material of the composite to a grinding treatment to prepare a napped raw material, and moving and heating the napped raw material, while tentering the napped raw material to widen the napped raw material in the direction perpendicular to the conveying direction, thereby obtaining the napped artificial leather.
[10] The method of producing a napped artificial leather according to [9], wherein, the tentering rate W1 in the direction perpendicular to the conveying direction in the step (i), the tentering rate W2 in the direction perpendicular to the conveying direction in the step (ii), and the tentering rate W3 in the direction perpendicular to the conveying direction in the step (iii) satisfy $0.3 \leq W1/(W1 + W2 + W3) \leq 0.8$.

Advantageous Effects of Invention

The present invention can provide a napped artificial leather which can restrain spontaneous elongation during the production process, enables setting the constant load elongation transverse/machine ratio to an appropriate value even without a scrim or a liner, and is excellent in pilling resistance and appearance, and a method of producing the napped artificial leather.

Brief Description of Drawing

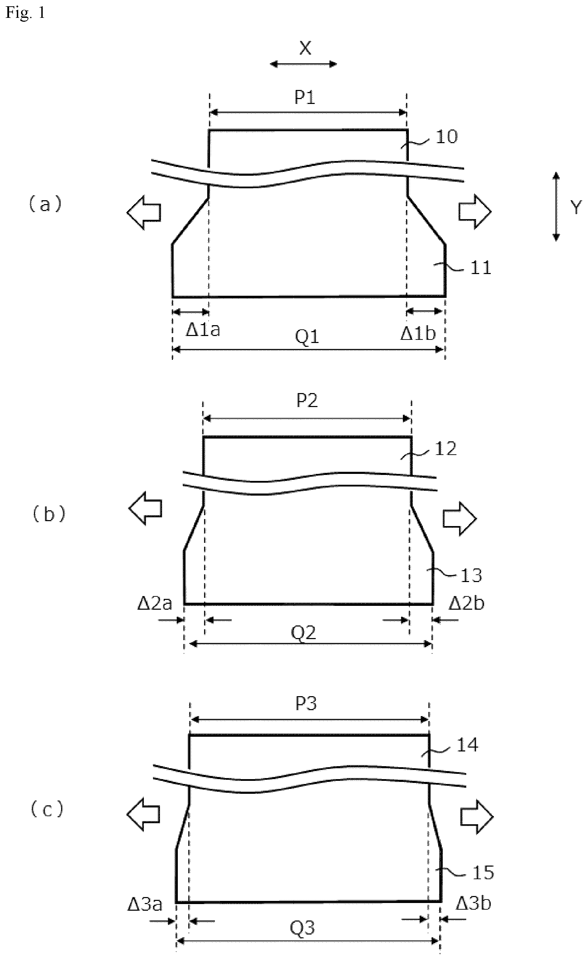

Fig. 1 is a schematic figure indicating an aspect of tentering in the method of producing a napped artificial leather.
Fig, 2 is a figure explaining about a method of measuring the constant load elongation.

Description of Embodiments

In the present description, the upper limits of the respective numeral ranges (the content of each component, the value calculated from each component, various physical properties or the like) may be combined with the lower limits of the respective numeral ranges appropriately. Further, in the present description, with respect to the numerals for each symbol in the formulae, appropriate combinations may be possible.

Namely, in the present description, with respect to the numeral ranges regarding the same matter, the lower limit values and the upper limit values described stepwise may be combined independently. For example, based on the description "preferably from 10 to 90, more preferably from 30 to 60" regarding the same matter, the preferred lower limit value (10) and the more preferred upper limit value (60) may be combined to recite "a range of 10 to 60".

Further, with respect to the numeral range, for example, based on the description "preferably from 10 to 90, more preferably from 30 to 60", the lower limit value side may be defined to recite "10 or more" or "30 or more" without defining the upper limit value particularly. Similarly, only the upper limit value side may be defined to recite "90 or less" or "60 or less" without defining the lower limit value particularly.

Incidentally, when " 10 to 90" is described simply with respect to the numeral range, the description donates a range of 10 or more and 90 or less, unless otherwise indicated.

Similarly to the above, for example, based on the description "preferably 10 or more, more preferably 30 or more" and the description "preferably 90 or less, more preferably 60 or less", "the preferred lower limit value (10)" and "the more preferred upper limit value (60)" may be combined to recite "10 or more and 60 or less". Similarly to the above, the lower limit value side only may be defined to recite "10 or more" or "30 or more", and similarly, the lower limit value side only may be defined to recite "90 or less" or "60 or less".

[Napped Artificial Leather]

The napped artificial leather according to the embodiment of the present invention is a napped artificial leather including a nonwoven fabric which is an entangled body of microfine fibers and a high-molecular elastic body attached to the nonwoven fabric, and having on at least one surface thereof a napped surface composed of microfine fibers napped, and satisfies the following conditions.

(1) The nonwoven fabric is composed of microfine polyester filaments.
(2) The fiber density D1 in the transverse direction is from 150 to 450 fibers/mm$^2$, the fiber density D2 in the machining direction is from 150 to 450 fibers/mm$^2$, and D1/D2 is from 0.7 to 1.1.

Since the microfine polyester filaments are used in the napped artificial leather, the spontaneous elongation in the production of the napped artificial leather, especially, in the heat-drying step at preparing a nonwoven fabric, can be restrained. Accordingly, the napped artificial leather can be produced at a low tentering rate, thereby realizing a good productivity. Since the tentering rate can be set low, it is possible to set the constant load elongation transverse/machine ratio of the napped artificial leather to an appropriate value without a scrim or a liner so that the generation of wrinkles at the time of processing can be restrained. Furthermore, since the tentering rate can be set low, the space between fibers is prevented from increasing excessively, so that a napped artificial leather being good in both a pilling resistance and an appearance can be provided.

With respect to the napped artificial leather, as described above, the constant load elongation transverse/machine ratio of the napped artificial leather can be set to an appropriate value even without a scrim or a liner. Accordingly, a scrim or a liner is unnecessary. However, for example, in the case where it is unnecessary to processed into a complicated shape, at least one of these may be provided.

In the case where a scrim or a liner is not provided, the simple constitution of the napped artificial leather can be employable, so that the napped artificial leather becomes likely to be processed into a complicated shape, and the napped artificial leather does not cause a problem that a scrim or a liner becomes exposed on the surface. On the other hand, in the case where a scrim or a liner is provided, it becomes easier to set the constant load elongation transverse/machine ratio of the napped artificial leather to an appropriate value.

The term "filament" in the present description means not a staple fiber prepared by cutting intentionally after spinning but a continuous fiber. More concretely, the filament means, for example, not a staple fiber such as those prepared by cutting intentionally so as to provide a fiber length of approximately from 3 to 80 mm, but a filament or a continuous fiber. The fiber length of a sea/island composite fiber, which is not subjected to microfinefiberization, is preferably 100 mm or more, and may be several meters, several hundred meters, or several kilometers or more as long as it is technically producible and is not subjected to an inevitable cutting in the production step. Incidentally, when needle-punching for entanglement or buffing to the surface is performed, part of the filaments may be cut to become a staple fiber.

In the present description, the term "machine direction" is the conveying direction (MD) in the line of producing an artificial leather, and the direction perpendicular thereto is "transverse direction". The machine direction of the artificial leather included in the products can be determined based on plural factors such as an aligning (orienting) direction of the fiber bundle of the microfine fibers, and a streak trace or a treatment trace caused by a needle punching or a high-speed fluid treatment. In the case where no machine direction is determined for the reasons that the respective machine directions determined based on these plural factors are different, definite orientation is not observed, or a streak trace is not observed, the direction in which the maximum tensile strength is exhibited is designated as "machine direction", and the direction perpendicular thereto is designated as "transverse direction".

In the present description, the fiber density is a value obtained by dividing the number of fibers by the number of islands (12 islands in Example described later), and the unit is "number of fibers/mm$^2$", with the proviso that the number of fibers is determined by photographing the cross-section of the napped artificial leather (for measuring the fiber density in the machine direction, the cross-section obtained by cutting the napped artificial leather perpendicularly to the conveying direction, and for measuring the fiber density in the transverse direction, the cross-section obtained by cutting the napped artificial leather in the conveying direction) at a magnification of 150 by a scanning electron microscope (SEM), and counting the number of the fibers on the cross-section portion.

With respect to the above condition (2), from the viewpoint of enhancing the pilling resistance and the appearance, it is preferred that the following condition (2-1) is satisfied, it is more preferred that the following condition (2-2) is satisfied, and it is further more preferred that the following condition (2-3) is satisfied.

(2-1) The fiber density D1 in the transverse direction is from 150 to 450 fibers/mm$^2$, the fiber density D2 in the machine direction is from 150 to 450 fibers/mm$^2$, and D1/D2 is from 0.7 to 1.1.
(2-2) The fiber density D1 in the transverse direction is from 150 to 350 fibers/mm$^2$, the fiber density D2 in the machine direction is from 250 to 450 fibers/mm$^2$, and D1/D2 is from 0.7 to 1.1.
(2-3) The fiber density D1 in the transverse direction is from 150 to 300 fibers/mm$^2$, the fiber density D2 in the machine direction is from 310 to 450 fibers/mm$^2$, and D1/D2 is from 0.7 to 0.94.

For preparing the napped artificial leather satisfying the above-described condition (2), condition (2-1), condition (2-2), or condition (2-3), for example, the tentering rates in the respective steps may be adjusted.

It is preferred that the above napped artificial leather further satisfy the following condition (3).

(3) $0.3 \leq L1/L2 \leq 3.5$ where L1 is an elongation in the transverse direction at a constant load of 110.8N and L2 is an elongation in the machine direction at a load of 110.8N.

The above-described constant load elongation machine/transverse ratio L1/L2 being 3.5 or less, the constant load elongation in the transverse direction is prevented from becoming too large as compared with the constant load elongation in the machine direction, so that the generation of wrinkles during processing is likely to be prevented. The above-described constant load elongation machine/transverse ratio L1/L2 being 0.3 or more, the constant load elongation in the transverse direction is prevented from becoming too small as compared with the constant load elongation in the machine direction, so that the generation of wrinkles during processing is likely to be prevented.

Incidentally, the above-described constant load elongation machine/transverse ratio is a value at a state where at least the napped artificial leather includes neither a scrim nor a liner. The napped artificial leather having a scrim or a liner may satisfy the above-described constant load elongation machine/transverse ratio.

From the viewpoint of easiness in preventing the above L1/L2 value from becoming excessively large, the constant load elongation in the transverse direction L1 is preferably from 4% to 20%, more preferably from 4% to 19%, further preferably from 4% to 18%, further more preferably from 4% to 17%.

From the viewpoint of easiness in preventing the above L1/L2 value from becoming excessively small, the constant load elongation in the machine direction L2 is preferably from 2% to 10%, more preferably from 3% to 9%, further preferably from 3% to 8%, further more preferably from 3% to 7%, further more preferably from 4% to 7%.

From the viewpoint of enhancing the productivity while preventing generation of wrinkles etc. during processing, preferably $1.0 \leq L1/L2 \leq 5.0$, more preferably $1.0 \leq L1/L2 \leq 4.0$, further preferably $1.0 \leq L1/L2 \leq 3.5$, further more preferably $1.3 \leq L1/L2 \leq 3.5$, further more preferably $1.5 \leq L1/L2 \leq 3.5$, further more preferably $2.0 \leq L1/L2 \leq 3.5$, particularly preferably $2.3 \leq L1/L2 \leq 3.5$.

For satisfying the above condition (3), for example, it is employable to tenter a sheet during the preparation, especially a sheet during the preparation of the nonwoven fabric, in the transverse direction at a prescribed tentering rate, as described later.

From the viewpoint of facilitating the processability into a complicated shape while making the constant load elongation machine/transverse ratio controllable appropriately without a scrim or a liner, the breaking elongation in the machine direction of the napped artificial leather, as measured according to 8.14.1 A Method in JIS L 1096 (1999), is preferably 60% or more, more preferably 65% or more, further preferably 70% or more, further more preferably 75% or more, particularly preferably 80% or more. The upper limit of the breaking elongation in the machine direction is not limited particularly, and is, for example, 100% or less or 95% or less. In other words, the breaking elongation in the machine direction of the napped artificial leather is preferably from 60 to 100%.

For making the breaking elongation in the machine direction fall within the above range, for example, an adjustment of physical properties of the fiber (strength, elongation), and an adjustment of an entangle state of the nonwoven fabric or a shrinkage rate of the nonwoven fabric can be exemplified.

From the viewpoint of facilitating the processability into a complicated shape while making the constant load elongation machine/transverse ratio controllable appropriately without a scrim or a liner, the breaking elongation in the transverse direction of the napped artificial leather, as measured according to 8.14.1 A Method in JIS L 1096 (1999), is preferably 60% or more, more preferably 70% or more, further preferably 80% or more, further more preferably 90% or more, particularly preferably 95% or more. The upper limit of the breaking elongation in the transverse direction is not limited particularly, and is, for example, 130% or less or 120% or less. In other words, the breaking elongation in the transverse direction of the napped artificial leather is preferably from 60 to 130%.

For making the breaking elongation in the transverse direction fall within the above range, for example, an adjustment of physical properties of the fiber (strength, elongation), and an adjustment of an entangle state of the nonwoven fabric or a shrinkage rate of the nonwoven fabric can be exemplified.

(Nonwoven Fabric)

The nonwoven fabric included in the napped artificial leather is an entangled body of microfine fibers. Specifically, the nonwoven fabric is composed of microfine polyester filaments.

The nonwoven fabric can be prepared by shrinking a web entangled sheet composed of a stacked body of fiber webs in a hot water, and moving and drying the resultant while tentering the resultant to widen the resultant in a direction perpendicularly to the conveying direction. In the following, the nonwoven fabric, along with the production method, is described in details.

The nonwoven fabric, which is an entangled body of microfine fibers, is a nonwoven fabric of fiber bundles, each of which microfine fibers form. Such a nonwoven fabric can be obtained by subjecting a microfine fiber generation type fiber such as a sea/island type (matrix-domain type) composite fiber to an entanglement treatment and a microfinefiberization treatment. In the following, an example where a sea/island type (matrix-domain type) composite fiber is used is described in detail.

Examples of the method of producing a nonwoven fabric which is an entangled body of microfine fibers include a method of melt-spinning a sea/island type composite fiber, thereby producing a web, subjecting the web to an entanglement treatment, and selectively removing the sea component from the sea/island type composite fiber, thereby forming microfine fibers. Further, in any step before removing the sea component from the sea/island type composite fiber to thereby form microfine fibers, a fiber shrinkage treatment, such as a heat shrinkage treatment with water vapor, hot water or dry heat, may be performed to densify the sea/island type composite fiber.

As the method of producing a web, examples thereof include a method of collecting a sea/island type composite fiber of filaments spined according to a spun bonding method, without cutting, thereby forming a web of the filaments, and a method of cutting filaments into staples, thereby forming a staple fiber web. Among them, in terms of easiness in adjusting the entangled state and exhibiting a high sense of fulfillment, it is particularly preferred to use a web of filaments derived from a sea/island type composite fiber of filaments spined according to a spun bonding method. Further, the web formed may be subjected to a fusion treatment to impart a shape stability thereto. In the following, an example where filaments of a sea/island type composite fiber are used is described in details.

As the kinds of the resin for the island component for the microfine fiber (hereinafter also referred to as "first resin"), examples thereof include polyester fibers of polyethylene terephthalate (PET), a modified PET such as isophthalic acid-modified PET, sulfoisophthalic acid-modified PET or a cationic dye-dyeable PET; an aromatic polyester such as polybutylene terephthalate or polyhexamethylene terephthalate; an aliphatic polyester such as polylactic acid, polyethylene succinate, polybutylene succinate, polybutylene succinate adipate, or polyhydroxy butyrate-polyhydroxy valerate resin; or the like.

Having characteristics such as a high durability and a good dyeability, the polyester fiber is preferred as the fiber constituting the nonwoven fabric included in the napped artificial leather. Among them, the aromatic polyester fiber is more preferred from the viewpoint of the durability, and the PET is further preferred from the viewpoint of the price, the availability or the like.

Further, the modified PET is a PET where at least part of a dicarboxylic acid monomer unit or a diol monomer unit of an unmodified PET, which have an ester-forming properties, is replaced by a replaceable monomer unit. Examples of a modification monomer unit for replacing the dicarboxylic monomer unit include a unit derived from isophthalic acid, sodium sulfo-isophthalic acid, sodium sulfo-naphthalene dicarboxylic acid, or adipic acid, which is to replace the terephthalic acid unit. Further, examples of a modification monomer unit for replacing the diol monomer unit include a unit derived from diol such as butane diol, hexane diol, or the like, which is to replace the diol monomer unit.

Incidentally, a dark pigment such as carbon black, a white pigment such as zinc oxide, lead white, lithopone, titanium dioxide, sedimentary barium sulfate, or baryta powder, an anti-mold agent, an anti-mold agent, a hydrolysis-preventing agent, a lubricant, fine particles, or a frictional resistance-adjusting agent may be incorporated in the fiber, if desired, as long as the effects of the present invention are not impaired.

The intrinsic viscosity of the resin of the island component for obtaining the microfine fiber is preferably from 0.55 to 0.8 dl/g, more preferably approximately from 0.55 to 0.75 dl/g. Unless the intrinsic viscosity of the thermoplastic resin which constitutes an island component is too small, it is possible to prevent the tensile strength of the obtained microfine fiber from becoming low, and unless the intrinsic viscosity of the thermoplastic resin which constitutes an island component is too high, it is possible to prevent the melt spinning from becoming difficult.

As the resin for the sea component (hereinafter also referred to as "second resin") which is to be removed by extraction or decomposition after the formation of microfine fibers, usable is a resin which is different in the solubility or decomposition property from the resin for constituting an island component and has a low compatible therewith. Such a resin may be selected appropriately depending on the kinds of the resin for the island component or a production method thereof. Concretely, examples thereof include a resin which has a solubility in an organic solvent and is removable through dissolution in an organic solvent, such as polyethylene, polypropylene, an ethylene propylene copolymer or an ethylene vinyl acetate copolymer, polystyrene, styrene acrylate copolymer, or a styrene ethylene copolymer, and a water-soluble resin such as a water-soluble polyvinyl alcohol. Among them, a resin which has a solubility in an organic solvent and is removable through dissolution in an organic solvent is preferred, since melt spinning can be performed even if the resin of the island component having a high intrinsic viscosity is used.

The web of the sea/island type composite fiber can be produced by a spun bonding method which includes: extruding continuously melt-strands for the sea/island composite fiber at a prescribed ejection rate through spinning nozzles by means of a spinneret for composite spinning where plural nozzle holes are disposed in a prescribed pattern, stretching the melt-strands while cooling with a fast gas stream, and then depositing the resultant on a moving net like a convey belt. Incidentally, the web of filaments deposited on the net may be subjected to a heat press in order to impart a shape stability thereto.

The number of the island component, which constitutes the microfine fiber, on the cross section of the sea/island type composite fiber is preferably from 5 to 200, more preferably 10 to 50, particularly from 10 to 30, in terms of enabling the fiber bundle of microfine fibers having appropriate voids to be formed.

In this case, as the condition of melt-spinning the sea/island type composite fiber, when the ejection rate of the melt resin extruded from one hole of the spinning nozzle (g/min) is designated as "A", the melt specific gravity of the resin (g/cm$^3$) is designated as "B", the area of one hole (mm$^2$) is designated as "C", and the spinning rate (m/min) is designated as "D", the melt spinning is preferably performed under such a condition that the spinning draft calculated according to the following formula falls within the range of 200 to 500, further preferably 250 to 400.

$$\text{Spinning Draft} = D/(A/B/C) \qquad \text{Formula (1)}$$

As the entanglement treatment, examples thereof include a method of stacking plural webs each composed of filaments in the thickness direction by means of a cross lapper or the like, and then subjecting both surfaces of the stacked webs simultaneously or alternately to a needle punch or a high-pressure water stream treatment under such a condition that at least one varve penetrates. The punch density of the needle punch treatment is preferably from 1,500 to 5,500 punch/cm$^2$, more preferably approximately from 2,000 to 5,000 punch/cm$^2$ in terms of easiness in exhibiting a high abrasion resistance. Unless the punch density is too low, the lowering of the abrasion resistance can be restrained, and unless the punch density is too high, it can be avoided that the fibers are cut to thereby lower the entanglement degree.

At any step from the spinning step to the entangling treatment, an oily agent or an antistatic agent may be added to the web of filaments. Further, if necessary, the web of filaments may be subjected to a shrink treatment which immersing the web of filaments in a hot water having a temperature of approximately from 70 to 150°C to thereby dense the entangled state of the web of filaments in advance.

It is preferred that the basis weight of an entangled web obtained by entangling the web of filaments falls within the range of approximately from 100 to 2,000 g/m$^2$. Further, if necessary, a treatment to enhance the fiber density and the entanglement degree may be performed by subjecting the entangled web to a heat shrinkage. For the purposes such as the purpose of setting the shape of the entangled web and the purpose of flattening the surface, in addition to the purpose of further densing the entangled web densed by a heat shrinkage treatment, if necessary, a heat press treatment may be performed to further increase the fiber density.

(High-molecular Elastic Body)

In the production of the napped artificial leather, in order to impart the shape stability and the sense of fulfillment, the high-molecular elastic body is impregnated into and attached to the entangled web where the sea/island type composite fibers are entangled before removing the sea component. Thus, the high-molecular elastic body is impregnated into and attached to the entangled web where the sea/island type composite fibers before removing the sea component are entangled, and after removing the sea component, voids, which are formed by removing the sea component, are formed among microfine fibers which form a bundle. As a result thereof, the microfine fibers are not confined by the high-molecular elastic body, and therefore, a napped artificial leather having a soft texture can be obtained. Incidentally, in the case where the nonwoven fabric of microfine filaments forming the fiber bundles after the sea component is removed from the sea/island type composite fibers is impregnated with the high-molecular elastic body so that the high-molecular elastic body is attached thereto, the high-molecular elastic body penetrates in the voids in the fiber bundles, and therefore, the microfine fibers which forms the fiber bundles are confined by the high-molecular elastic body, so that a napped artificial leather having a hard texture can be obtained.

Examples of the high-molecular elastic body include polyurethane, an acrylonitrile elastomer, an olefin elastomer, a polyester elastomer, a polyamide elastomer, and an acryl elastomer. Among them, polyurethane is particularly preferable. Examples of the polyurethane include polycarbonate urethane, polyether urethane, polyester urethane, polyether ester urethane, polyether carbonate urethane, and polyester carbonate urethane. The polyurethane may be a solidified polyurethane (solvent-based polyurethane) provided by impregnating a nonwoven fabric in a solution prepared by dissolving the polyurethane in a solvent such as N,N-dimethylformamide and solidifying the polyurethane by a wet coagulation method, or a solidified polyurethane (water-based polyurethane) provided by impregnating the nonwoven fabric in an emulsion prepared by dispersing the polyurethane in water and then drying. The solvent-based polyurethane is particularly preferred, since an appropriate dissociation between the polyurethane and the microfine fibers can be caused even if the amount of the polyurethane is increased, and therefore, a napped artificial leather having a soft texture is likely to be obtained.

Incidentally, the high-molecular elastic body may be compound with a pigment such as carbon black, a coloring agent such as a dyestuff, a coagulation adjusting agent, an antioxidant, an ultraviolet-absorbing agent, a fluorescent agent, an anti-mold agent, a penetrating agent, an antifoaming agent, a lubricant, a water repellent, an oil repellent, a thickener, a curing accelerator, a foaming agent, a water-soluble high-molecular compound such as polyvinyl alcohol or carboxymethyl cellulose, inorganic fine particles, an electroconductive agent, or the like.

The high-molecular elastic body is included preferably in an amount of from 15 to 40% by mass, more preferably from 20 to 35% by mass, further preferably from 22 to 33% by mass, with respect to the total mass of the high-molecular elastic body and the nonwoven fabric.

By removing the resin for the sea component from the nonwoven fabric where microfine fibers are entangled, the nonwoven fabric where microfine fibers are entangled and the microfine fibers forming the bundles are not confined by the high-molecular elastic body is formed. As the method of removing the resin for the sea component from the sea/island type composite fiber, the conventionally known method for forming microfine fibers such as the method of treating the nonwoven fabric, in which the sea/island type composite fibers are entangled, with a solvent or a composing agent which each is capable of selectively removing the resin for the sea component only, can be employed without any particular limitation.

The basis weight of the thus-obtained composite of the high-molecular elastic body and the nonwoven fabric which is an entangled body of the bundles of filaments of microfine fibers is preferably from 140 to 3,000 g/m$^2$, further preferably from 200 to 2,000 g/m$^2$.

(Napped Raw Material)

The napped raw material having a napped surface where fibers on the surface layer are napped can be obtained by half-cutting the nonwoven fabric which the high-molecular elastic body was impregnated into and attached to by means of a slice machine, and then buffing one surface or both surfaces thereof.

The buffing is performed by using a sand paper preferably having a count of from Nos. 120 to 600, further preferably approximately from Nos. 320 to 600 or an emery paper. Thus, the napped raw material having a napped surface, on which napped fibers are present, on one surface or both surfaces thereof can be obtained.

With respect to the napped surface of the napped raw material, for the purposes of preventing the microfine fibers napped on the napped surface from falling off or being raised when subjected to the friction in order to enhance the appearance quality, the bundles may be fixed with the high-molecular elastic body by subjecting the surface of the napped raw material to a gravure coating with a solution which microfine fibers do not dissolve in but the high-molecular elastic body swells or dissolves in. By applying the solvent as described above onto the surface of the napped raw material, the high-molecular elastic body on the periphery of the microfine fiber bundle swells or dissolves so that the high-molecular elastic body penetrates and fills in the gaps in the microfine fiber bundle. As the solvent, a solution which the microfine fibers made of a polyester, a polyamide or the like does not dissolve in and only the high-molecular elastic body swells or dissolves in can be selected. Concretely, for example, by using a mixed solution including a good solvent and a solvent having a low solubility with respect to the high-molecular elastic body and adjusting the ratio of the good solvent and the solvent having a low solubility, the adhesion degree between the high-molecular elastic body and the microfine fiber can be controlled.

For example, in the case where the high-molecular elastic body is polyurethane, a mixed solution including dimethylformamide (hereinafter, DMF) or tetrahydrofuran (hereinafter, THF) as a good solvent and acetone, toluene, cyclohexanone, ethyl acetate, butyl acetate, or the like, each having a low dissolution ability, at an arbitrary ratio can be used.

Incidentally, the high-molecular elastic body may be locally attached to the vicinity of roots of the napped microfine fibers. Concretely, for example, a solution or an emulsion containing a high-molecular elastic body is applied onto the napped surface and then dried to solidify the high-molecular elastic body. In the case where the high-molecular elastic body is locally attached to the vicinity of roots of the napped microfine fibers, the vicinity of roots of the napped microfine fibers is confined by the high-molecular elastic body, and the microfine fibers becomes hard to fall off. As examples of the high-molecular elastic body to be attached to the napped surface, the same as described above can be used.

The recitation "microfine fibers fixed with the high-molecular elastic body" means that when the cross-section of the napped artificial leather in the thickness direction is observed by a scanning electron microscope, the high-molecular elastic body adheres to the microfine fibers at a solid state to confine the microfine fibers. The term "surface layer portion" means a region where the high-molecular elastic body, which is locally attached to fix the vicinity of roots of the napped microfine fibers, is attached. Concretely, for example, it is a region of 10% or less, further a region of 5% or less, from the roots of the napped microfine fibers with respect to the thickness of the whole napped artificial leather.

The napped raw material may be subjected to a shrinkage processing treatment or a crumpling-softening treatment which impart the flexibility for adjusting the texture, , or a finishing treatment such as a brushing treatment to a reverse seal, antifouling treatment, hydrophilic treatment, a lubricant treatment, a softener treatment, an antioxidant treatment, ultraviolet-absorbing agent treatment, a fluorescent treatment, or a flame-retardant treatment.

The napped raw material may be subjected to a washing or drying appropriately, without being dyed. However, it is preferably finished by being dyed. The dyestuff can be selected appropriately according to the the kinds of the microfine fibers. For example, in the case where the microfine fiber is formed of a polyester resin, dyeing with a disperse dyestuff or a cationic dyestuff is preferred. Examples of the disperse dyestuff include a benzene azo type dyestuff (monoazo-, disazo- or the like), a heterocyclic azo dyestuff (thiazole azo, benzothiazole azo, quinoline azo, pyridine azo, imidazole azo, thiophene azo or the like), an anthraquinone dyestuff, and condensed dyestuff (quinophthaline, styryl, coumarin). These are put on a market as the dyestuffs having the prefix "Disperse". These may be used alone or two or more thereof may be used in combination. As the dyeing method, dyeing methods such as a high-pressure fluid dyeing method, a jigger dyeing method, a thermosol continuous dyeing machine method, and sublimation printing system can be employed without any particular limitation.

Thus, the napped artificial leather of the present embodiment can be obtained.

The fineness of the microfine fibers which forms the nonwoven fabric is preferably 0.5 dtex or less, more preferably from 0.07 to 0.5 dtex. Incidentally, the fineness can be determined as an average value calculated from the values obtained by subjecting the cross-section parallel to the thickness direction of the thickness of the napped artificial leather to a magnification radiography at a magnification of 3,000 by a scanning electron microscope (SEM), selecting 15 fibers thoroughly, and calculating from the sizes of the 15 fibers and the density of the resin which forms the fibers.

Further, the apparent density of the napped artificial leather is preferably 0.4 $g/cm^3$ or more, more preferably from 0.4 to 0.7 $g/cm^3$ or more, further preferably from 0.4 to 0.5 $g/cm^3$ or more. Such an apparent appearance enables the napped artificial leather to have an excellent balance between the sense of fulfillment and the soft texture, without causing sharp bending. In the case where the apparent density of the napped artificial leather is 0.4 $g/cm^3$ or more, the

sense of fulfillment is ensured to become hard to cause sharp bending, and when the napped surface is subjected to friction, the fibers are hard to be drawn out, and graceful appearance of the nap can be easily exhibited. Further, unless the apparent density of the napped artificial leather is too large, the soft texture can be easily exhibited.

[Method of Producing Napped Artificial Leather]

The first method of producing a napped artificial leather according to the embodiment of the present invention is a method of producing a napped artificial leather, which has the following steps (i) to (iii):

(i) a step of preparing a nonwoven fabric, which includes shrinking a web-entangled sheet composed of a stacked body of fiber webs each obtained by melt spinning a polyester resin, which is an island component, and a second resin, which is a sea component, in a hot water, and moving and drying the resultant, while tentering the resultant to widen the resultant in the direction perpendicular to the conveying direction,

(ii) a step of preparing a composite, which includes impregnating the nonwoven fabric with a solution containing a high-molecular elastic body, solidifying the high-molecular elastic body, and dissolving the second resin in a solution to remove the second resin, thereby preparing a composite where the high-molecular elastic body is attached to the nonwoven fabric, and

(iii) a step of preparing a napped artificial leather, which includes half-cutting the composite, subjecting at least one surface of the obtained half-cut material to a grinding treatment, thereby preparing a napped artificial leather.

In the production method of the napped artificial leather, by the use of a stacked body of fiber webs each obtained by melt spinning a polyester resin (the first resin), which is an island component, and a second resin, which is a sea component in the above step (i), the spontaneous elongation in the heat drying step for preparing the nonwoven fabric can be restrained. Therefore, it is avoidable that hanging-down of the sides of the sheet in the process of the production is caused by the spontaneous elongation to generate the friction, and a high productivity at a low tentering rate can be realized.

Incidentally, the above step (i) includes shrinking the above web-entangled sheet in a hot water, and moving and drying the resultant, while tentering the resultant to widen the resultant in the direction perpendicular to the conveying direction. Therefore, it is avoidable that the constant load elongation in the transverse direction is largely different from the constant load elongation in the machine direction, and the constant load elongation transverse/machine ratio of the napped artificial leather can be adjusted appropriately even without a scrim or a liner. As a result thereof, the generation of wrinkles during processing can be restrained.

Further, by appropriately adjusting the constant load elongation transverse/machine ratio of the napped artificial leather, generation of memuki or lowering of pilling property is restrained so that a napped artificial leather having both performance on sensitivity and performance on physical property to a high level can be provided.

In the following, the respective steps included in the method of producing a napped artificial leather are described.

<Step (i)>

As described above, the above step (i) is a step of preparing a nonwoven fabric by shrinking a web-entangled sheet sheet composed of a stacked body of fiber webs each obtained by melt spinning a polyester resin, which is an island component, and a second resin, which is a sea component, in a hot water, and moving and drying the the resultant, while tentering the resultant to widen the resultant in the direction perpendicular to the conveying direction.

The specific procedures of the step (i) are as described in the section of "Nonwoven Fabric" described above.

In the step (i), tentering of a sheet which is an object to be processed with tentering can be performed by applying a tension in the transverse direction to the sheet to be processed, while heating, by means of a tenter dryer provided with a heater and a tenter. This point is the same as in the steps (ii) and (iii).

In the method of producing a napped artificial leather, from the viewpoints of easiness in adjusting the constant load elongation transverse/machine ratio to an appropriate value and ensuring a good appearance, it is preferred in the step (i) to prepare a heat shrunk web-entangled sheet by shrinking the web-entangled sheet in a hot water, and moving and drying the resultant, while tentering the resultant to widen the resultant in the direction perpendicular to the conveying direction at a tentering rate W1 of 6 to 17%.

In the following, the tentering rate W1 at which the web-entangled sheet shrunk in a hot water is tentered to be widened in the direction perpendicular to the conveying direction in the step (i) is sometimes referred to as "nonwoven fabric tentering rate W1" or simply " tentering rate W1".

From the viewpoints of easiness in adjusting the constant load elongation transverse/machine ratio to an appropriate value and easiness in ensuring a good appearance, the tentering rate W1 is more preferably from 6 to 15%, further preferably from 6 to 14%, further preferably from 7 to 14%, further more preferably from 7 to 13%, particularly preferably from 7 to 12%.

<Step (ii)>

The step (ii) is a step of preparing a composite where the high-molecular elastic body is attached to the nonwoven fabric, which includes impregnating the nonwoven fabric with a solution containing a high-molecular elastic body, solidifying the high-molecular elastic body, and dissolving the second resin in a solution to remove the second resin.

The specific procedures in the step (ii) are as described in the section of "High-molecular Elastic Body" described above.

In the above method of producing a napped artificial leather, from the viewpoint of easiness in adjusting the constant load elongation transverse/machine ratio to an appropriate value, it is preferred in the step (ii) to prepare the above composite by moving and drying the above nonwoven fabric while tentering the nonwoven fabric to widen the nonwoven fabric in the direction perpendicular to the conveying direction.

In the following, the tentering rate W2 at which the nonwoven fabric being moved and dried is tentered to be widened in the direction perpendicular to the conveying direction in the step (ii) is sometimes referred to as "base fabric tentering rate W2" or simply "tentering rate W2".

In the step (ii), from the viewpoint of easiness in adjusting the constant load elongation transverse/machine ratio to an appropriate value, moving and drying are performed while tentering at a tentering rate W2 of preferably from 1.5 to 8%, more preferably from 1.5 to 7%.

<Step (iii)>

The step (iii) is a step of preparing a napped artificial leather, which includes half-cutting the composite, subjecting at least one surface of the obtained half-cut material to a grinding treatment.

The specific procedures in the step (iii) are as described in the section of "Napped Raw material" described above.

In the above method of producing the napped artificial leather, from the viewpoint of easiness in adjusting the constant load elongation transverse/machine ratio to an appropriate value, it is preferred to perform, besides moving and drying the nonwoven fabric while tentering the nonwoven fabric to widen the nonwoven fabric in the direction perpendicular to the conveying direction in the step (ii), subjecting at least one surface of the obtained half-cut composite to a grinding treatment, to prepare a napped raw material, and moving and heating the napped raw material while tentering the napped raw material to widen the napped raw material in the direction perpendicular to the conveying direction in the step (iii), thus preparing the napped artificial leather.

The heat treatment in the step (iii) may be served as a drying treatment performed after a treatment such as a coloring treatment, a treatment of swelling or dissolving the high-molecular elastic body, or the attachment of the high-molecular elastic body for local attachment to the vicinity of roots of the napped microfine fibers.

In the following, in the step (iii), the tentering rate W3 at when the above napped raw material being moved and heated is tentered in the direction perpendicular to the conveying direction is sometimes referred to as "Post-processing Tentering Rate W3" or simply "Tentering Rate W3".

In the step (iii), from the viewpoint of easiness in adjusting the constant load elongation transverse/machine ratio to an appropriate value, drying and moving are performed while tentering at a tentering rate W3 of preferably from 1.5 to 8%, more preferably from 1.5 to 7%.

Fig. 1 is a schematic drawing which shows a state of tentering in the first and second methods of producing a napped artificial leather. In Fig. 1, the lengths in the transverse direction X (width at the inlet) when the material to be tentered enters in a tenter dryer in the step (i), (ii), and (iii) are designated as P1, P2, and P3, respectively. Further, the lengths in the transverse direction X (width at the outlet) when the material tentered comes out from a tenter dryer in the step (i), (ii), and (iii) are designated as Q1, Q2, and Q3, respectively. Incidentally, in the following description, the inlet widths P1 to P3 are sometimes inclusively designated as the symbol "P", and the outlet widths Q1 to Q3 are sometimes inclusively designated as the symbol "Q". In Fig. 1, the symbol "Y" means the machine direction.

As shown in Fig. 1(a), in the step (i) (or the step (i') described later), the web-tangled sheet 10 is tentered to obtain a web-tangled sheet 11 after tentering (nonwoven fabric). With the tentering, the inlet width P1 is expanded to the outlet width Q1. Here, when the tentered amounts on the left and right sides (the first tentered amount) are taken as $\Delta 1a$ and $\Delta 1b$, respectively, $Q1 = P1 + \Delta 1a + \Delta 1b$, and the tentering rate W1 is represented by the following formula (2).

$$W1 = (\Delta 1a + \Delta 1b)/P1 = (Q1\text{-}P1)/P1 \qquad \text{Formula (2)}$$

As shown in Fig. 1(b), in the step (ii), the web-tangled sheet 12 where a high-molecular elastic body is filled and the sea component is removed is tentered to obtain a composite 13 of the high-molecular elastic body and the nonwoven fabric. With the tentering, the inlet width P2 is expanded to the outlet width Q2. Here, when the tentered amounts on the left and right sides (the second tentered amount) are taken as Δ2a and Δ2b, respectively, Δ2a + Δ2b = Q2 - P2, and the tentering rate W2 is represented by the following formula (3).

$$W2 = (\Delta2a + \Delta2b)/P2 = (Q2-P2)/P1 \qquad \text{Formula (3)}$$

As shown in Fig. 1(c), the napped raw material 14 obtained by half-cutting and grinding the composite 13 is tentered to obtain the napped artificial leather. 15. With the tentering, the inlet width P3 is expanded to the outlet width Q3. Here, when the tentered amounts on the left and right sides (the third tentered amount) are taken as Δ3a and Δ3b, respectively, Δ3a + Δ3b = Q3 - P3, and the tentering rate W3 is represented by the following formula (4).

$$W3 = (\Delta3a + \Delta3b)/P3 = (Q3-P3)/P3 \qquad \text{Formula (4)}$$

Incidentally, in the following description, the tentering rates W1 to W3 are sometimes inclusively referred to as the symbol W.

In the above method of producing the napped artificial leather, from the viewpoint of ensuring a good appearance and a high productivity, it is preferred that the tentering rate W1 in the direction perpendicular to the conveying direction in the step (i), the tentering rate W2 in the direction perpendicular to the conveying direction in the step (ii), and the tentering rate W3 in the direction perpendicular to the conveying direction in the step (iii) satisfy $0.3 \le W1/(W1 + W2 + W3) \le 0.8$.

In the following, the tentering rate W1 + the tentering rate W2 + the tentering rate W3 is sometimes referred to as "total tentering rate WT".

The second method of producing a napped artificial leather according to the other embodiment of the present invention is a method of producing a napped artificial leather provided with a nonwoven fabric to which a high-molecular elastic body is attached, wherein the nonwoven fabric is composed of polyester filaments, which includes the step (i'), the step (ii) and the step (iii) described below.

(i') a step of preparing a nonwoven fabric, which includes shrinking a web-entangled sheet in a hot water, the web-entangled sheet composed of a stacked body of fiber webs each obtained by melt spinning a polyester resin, which is an island component, and a second resin, which is a sea component, and moving and drying the resultant, while tentering the resultant to widen the resultant in the direction perpendicular to the conveying direction at a tentering rate W1 of 6 to 17%

(ii) a step of preparing a composite, which includes impregnating the nonwoven fabric with a solution containing a high-molecular elastic body, solidifying the high-molecular elastic body, and dissolving the second resin in a solution to remove the second resin, thereby preparing a composite where the high-molecular elastic body is attached to the nonwoven fabric,

(iii) a step of preparing a napped artificial leather, which includes half-cutting the composite, subjecting at least one surface of the obtained half-cut material to a grinding treatment, thereby preparing a napped artificial leather.

In the step (i'), the filaments are used and besides, the tentering rate W1 is from 6 to 17%. Therefore, it is avoidable that the constant load elongation in the transverse direction is largely different from the constant load elongation in the machine direction, and the constant load elongation transverse/machine ratio can be adjusted to an appropriate value. Further, since the range of the tentering rate W1, from 6 to 17%, is a comparatively narrow range, the productivity is not lowered.

From the viewpoint of easiness in adjusting the constant load elongation transverse/machine ratio can be adjusted to an appropriate value and easiness in ensuring a good appearance, the tentering rate W1 is more preferably from 6 to 15%, further preferably from 6 to 14%, further more preferably from 7 to 14%, further more preferably from 7 to 13%, particularly preferably from 7 to 12%.

The steps (ii) and (iii) in the second method of producing the napped artificial leather are the same as the steps (ii) and (iii) in the first method of producing the napped artificial leather, and therefore, detailed explanation is omitted.

EXAMPLES

In the following, the present invention is described in detail, referring to examples and comparative examples. Incidentally, the present invention is not limited to the following examples.

With respect to the napped artificial leather obtained in Examples and Comparative Examples described later, the constant load elongation, breaking elongation, the tentering ratio in each step, the content proportion of the high-molecular elastic body, the measurement of the fiber density, the evaluation of the appearance and pilling resistance, were evaluated according to the following procedures.

<Constant Load Elongation>

For measuring the constant load elongation in the machine direction, the napped artificial leather was cut into a strip such that the longitudinal direction corresponds to the machine direction to provide a sample for measurement having a length a of 250 mm in the measuring direction and a length b of 80 mm in the direction perpendicular to the measuring direction. Similarly, for measuring the constant load elongation in the transverse direction, the napped artificial leather was cut into a strip such that the longitudinal direction corresponds to the transverse direction to provide a sample for measurement having a length a of 250 mm in the measuring direction and a length b of 80 mm in the direction perpendicular to the measuring direction.

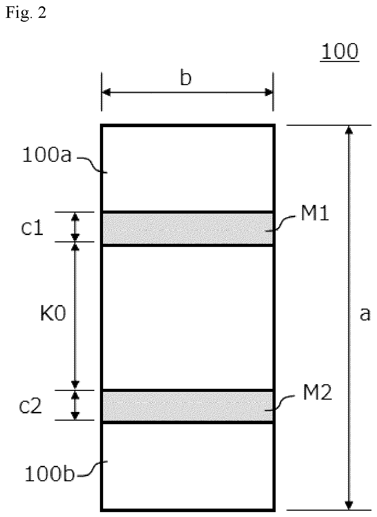

Further, as shown in Fig. 2, on the thus-prepared sample 100, marked lines M1 and M2, each having a width (length in the measuring direction) of 25 mm, were drawn in the direction perpendicular to the measuring direction at an interval of 100 mm (symbol K0 in Fig. 2) (namely, the distance K0 between the marked lines before the constant load was applied was taken as 100 mm). Further, the upper portion 100a of the sample 100 was gripped and fixed with the upper clamp, and the lower portion 100b of the sample 100 was gripped and fixed with the lower clamp. The sample was allowed to stand for 10 minutes at a state where a load of 11.3 kgf (110.8 N) including the lower clamp was applied, then the distance K1 between the marked lines was measured, and the constant load elongation was obtained according to the following formula (5).

$$\text{Constant Load Elongation (\%)} = ((K1-K0)/K0) \times 100 \qquad \text{Formula (5)}$$

<Breaking Elongation>

The breaking elongation was measured according to the method described in JIS L 1096 (1999), 8.14.1 Method A. A specimen having a width of 2.5 cm was fixed with chucks having a gripping interval of 20 cm, and pulled at a constant rate (100 mm/min), and the breaking elongation was measured.

<Tentering Rate>

In the drying treatment of each of the steps (i), (ii) and (iii), the inlet width P and the outlet width Q were measured. Specifically, the following (a) to (c) were measured.

> (a) the inlet width P1 and the outlet width Q1 in the drying treatment after the shrinkage of a web entangled sheet in a hot water
> (b) the inlet width P2 and the outlet width Q2 in the drying treatment after the dissolution removal of polyethylene by impregnating a web-entangled sheet, in which the polyurethane elastic body is filled, in toluene
> (c) the inlet width P3 and the outlet width Q3 in the drying treatment after dyeing the napped raw material

Based on the above, the tentering rate W of each step (namely, the above (a): the nonwoven fabric tendering rate W1, the above (b): the base fabric tendering rate W2, the above (c): the post-processing tendering rate W3) was calculated.

$$\text{Tentering Rate W (\%)} = ((Q-P)/P) \times 100 \qquad \text{Formula (6)}$$

<Change Rate in Machine Direction>

With respect to the drying treatment of each of the steps (i), (ii) and (iii), the length R in the machine direction of the sheet before the drying treatment and the length S of the sheet after the drying treatment were measured. Specifically, the following (a1) to (c1) were measured.

> (a1) With respect to the drying treatment after the shrinkage of a web-entangled sheet in a hot water, the length R1 in the machine direction of the web-entangled sheet before the drying treatment and the length S 1 in the machine direction of the web-entangled sheet after the drying treatment

(b 1) With respect to the drying treatment after the dissolution removal of polyethylene by impregnating a web-entangled sheet, in which the polyurethane elastic body was filled, in toluene, the length R2 in the machine direction of the sheet before the drying treatment and the length S2 in the machine direction of the sheet after the drying treatment

(c1) With respect to the drying treatment after dyeing the napped raw material, the length R3 in the machine direction of the napped raw material before the drying treatment and the length S3 in the machine direction of the napped raw material after the drying treatment

Based on the above, the rate Z of the change of the length in the machine direction in each step was calculated according to the following formula (7). Incidentally, the change rate in the machine direction of the web-entangled sheet in the above (a1), the change rate in the machine direction of the composite (base fabric) in the above (b 1), the change rate in the machine direction of the napped raw material in the above (c1) are designated as Z1, Z2, and Z3, respectively. Incidentally, Z1, Z2, and Z3 are also referred to as the nonwoven fabric machine direction change rate, the base fabric machine direction change rate, and the post-processing machine direction change rate, respectively.

$$\text{Change Rate Z of the length in the machine direction (\%)} = ((R\text{-}S)/R) \times 100$$

$$\text{Formula (7)}$$

<Content Proportion of High-molecular Elastic Body>

The mass G1 of about 10 g of the piece of the napped artificial leather was measured. The step of immersing the piece in dimethylformamide for the prescribed time and then subjecting the resultant to a press treatment was performed repeatedly, whereby the high-molecular elastic body, which was polyurethane, was extracted. Then, the residue after the extraction, i.e., the nonwoven fabric, was dried, and the mass G2 of the dried nonwoven fabric was measured. Then, the content proportion of the high-molecular elastic body was calculated according to the following formula (8).

$$\text{Content Proportion of High-molecular Elastic Body (mass \%)} = ((G1\text{-}G2)/G1) \times 100$$

$$\text{Formula (8)}$$

<Appearance>

The appearance of the obtained napped artificial leather was observed visually and evaluated according to the following criteria.

VG: The "memuki" (color unevenness derived from, for example, difference in color between the high-molecular elastic body and the fiber bundle) was not observed.

G: The "memuki" was slightly observed to a practically usable level.

NG: The "memuki" was observed wholly to a practically unusable level.

<Pilling Resistance>

Test was performed at a pressing load of 12 kPa and an abrasion number of 5,000 times by means of a Martindale abrasion testing machine according to JIS L 1096 (2010) (8.19.5 E method, Martindale method), and then, a series evaluation was performed according to the following criteria, "4 or more" is acceptable, and "3 or less" is unacceptable.

5: No change
4: A pilling having a maximum diameter of less than 1 mm was caused slightly to be a practically usable level.
3: A pilling having a maximum diameter of 1 to 3 mm was caused to be a practically unusable level.
2: A pilling having a maximum diameter of 3 to 5 mm was caused.
1: A pilling having a maximum diameter of more than 5 mm was caused in a large amount.

<Fiber Density>

The cross-section of the napped artificial leather was observed by means of a scanning electron microscope (SEM), and the image was photographed at a magnification of 150. Specifically, in the case where the fiber density in the machine direction was measured, the napped artificial leather was cut in the direction perpendicular to the conveying direction, and the cross-section was observed, and in the case where the fiber density in the transverse direction was measured, the napped artificial leather was cut along the conveying direction, and the cross-section was observed. Then, the number of the fibers on the cross-section in each image obtained was counted, and the value obtained by dividing the number of the fibers by the number of the islands (12 islands) was designated as the fiber density (number/mm$^2$). The cross-sectional area of the islands was 3 $\mu$m$^2$.

[Examples 1]

Polyethylene (PE: sea component) and polyethylene terephthalate having a limiting viscosity of 0.67 (island component) were extruded at 260°C and an extruded amount of 1.5 g/min per hole through a spinneret for melt composite spinning (the number of the islands: 12 islands/fiber) such that the sea component/island component was 35/65 (ratio by mass). The pressure of the ejector was adjusted such that the spinning speed was 3,450 m/min, and filaments having an average fineness of 4.5 dtex were collected on a net to obtain a span bond sheet (fiber web).

The obtained fiber webs were subjected to cross lapping to be stacked to form a stacked body such that the total basis weight was 700 g/m$^2$, followed by spraying with an oily agent for preventing the breakage of a needle. Next, the stacked body was subjected to a needle punching treatment at 2,024 punch/cm$^2$ using a needle (count: 42) with one barb and a needle (count: 42) with six barbs, thereby obtaining a web-entangled sheet. The web-entangled sheet had a basis weight of 860 g/m$^2$ and an interlayer peeling force of 12.4 kg/2.5 cm. The area shrinkage rate with respect to the shrinkage caused by the needle punch treatment was 20.2%.

Next, the obtained web-entangled sheet was shrunk in a hot water having a temperature of 90°C, dried in a tentering dryer having a temperature of 90 to 140°C at a tentering rate W1 of 10.1% (outlet width P1 = 138 cm and outlet width Q1 = 152 cm), and then pressed with rolls cooled, thereby a web-entangled sheet having a basis weight of 950 g/m2, a specific gravity of 0.430 g/cm3, and a thickness of 2.21 mm, which was subjected to a heat shrink treatment, was obtained. Incidentally, the change rate Z1 in the machine direction of the web-entangled sheet before and after the drying treatment was 1.7%.

Next, the web-entangled sheet subjected to the heat shrink treatment was impregnated with a DMF solution (solid component: 18.5%) of a polyurethane elastic body having a 100% modulus of 33 kg/cm$^2$, which was a polycarbonate yellowing resin so as to provide 30% by mass. Subsequently, the resultant was impregnated into a 30% aqueous solution of DMF at 40°C to cause the solidification. Next, while the web-entangled sheet where the polyurethane elastic body was filled was subjected to a nip treatment and an impregnation treatment, the web-entangled sheet was impregnated in toluene at 90°C for 180 minutes to dissolve and remove PE, and then dried in a tentering dryer at 90 to 140°C at a tentering rate W2 of 4.3% (inlet width P2 = 140 cm, outlet width Q2 = 146 cm). Thus, a composite of the polyurethane elastic body and the nonwoven fabric, which was an entangled body of the fiber bundles of the filaments of microfine fibers, and had a single fiber fineness of 0.21 dtex, a basis weight of 830 g/m$^3$, a specific gravity of 0.455 g/cm$^3$, and a thickness of 1.82 mm, was obtained. Incidentally, the change rate Z2 in the machine direction before and after the drying treatment of the composite (base fabric) was -5.0%.

Next, half-cutting was performed and subsequently, using a count No. 120 sand paper for the back surface, and count Nos. 240, 320, and 600 sand papers in this order for the front surface, the both surfaces were ground under the condition of a rate of 3.0 m/min and a rotation number of 650 rpm to obtain a napped raw material having a napped surface. Then, high-pressure dyeing was performed using a disperse dyestuff at 120°C, and drying was performed in a tentering dryer at 90 to 140°C at a tentering rate W3 of 3.5% (inlet width P3 = 142 cm, outlet width Q3 = 147 cm). Thus, a suede-like artificial leather, which was a napped artificial leather having a basis weight of 332 g/m2, a specific gravity of 0.405 g/cm3, a thickness of 0.82 mm, a change rate Z3 in the machine direction of 0.5%, a nonwoven fabric tentering rate W1/total tentering rate WT of 0.56, a fiber density in the machine direction of 320/m$^2$, a fiber density in the transverse direction of 268/m$^2$, and a ratio of transverse/machine direction of the fiber density of 0.84, was obtained.

[Examples 2 to 8]

Napped artificial leathers of Examples 2 to 8 were prepared in the same procedures as in Example 1 except for setting the nonwoven fabric tentering rate W1, the base fabric tentering rate W2, the post-processing tentering rate W3, the nonwoven fabric in the machine direction change rate Z 1, the base fabric in the machine direction change rate Z2, and the post-processing in the machine direction change rate Z3 to the values indicated in Table 1, respectively.

[Comparative Example 1]

A nonwoven fabric was prepared according to the same method except that staple fibers (16 islands PET/PE composite yarn 4 dtex, manufactured by Kuraray Co., Ltd.) were subj ected to web formation by means of a carding machine, and the obtained webs were stacked. During the preparation of the nonwoven fabric, the spontaneous elongation caused both edges of the sheet during the preparation to hang down, and the friction to the production apparatus etc. was caused. Therefore, the subsequent steps had not be performed. Incidentally, for preventing the friction, it was necessary that the tentering rate at the preparation of the nonwoven fabric was more than 20%.

[Comparative Examples 2 and 3]

Napped artificial leathers were prepared in the same procedures as in Example 1 except for setting the nonwoven fabric tentering rate W1, the base fabric tentering rate W2, the post-processing tentering rate W3, the nonwoven fabric in the machine direction change rate Z 1, the base fabric in the machine direction change rate Z2, and the post-processing in the machine direction change rate Z3 to the values indicated in Table 2, respectively.

The results of the measurements and evaluations of each physical property described above in Examples and Comparative Examples, along with the tentering rate in each step, are shown in Tables 1 and 2.

Table 1

| Kind of Fiber • Evaluation Items | Example 1 | Example 2 | Example 3 | Example 4 | Example 5 | Example 6 | Example 7 | Example 8 |
|---|---|---|---|---|---|---|---|---|
| Kind of Fiber | Filament | Filament | Filament | Filament | Filament | Filament | Filament | Filament |
| Nonwoven Fabric Tentering Rate W1 | 10.0% | 12.0% | 7.0% | 10.0% | 10.0% | 7.0% | 12.0% | 15.0% |
| Base Fabric Tentering Rate W2 | 4.3% | 4.5% | 4.0% | 5.0% | 3.0% | 6.5% | 2.0% | 4.4% |
| Post-processing Tentering Rate W3 | 3.5% | 3.3% | 4.2% | 5.5% | 4.1% | 6.2% | 2.0% | 3.1% |
| Nonwoven Fabric Machine Direction Change Rate Z 1 | 1.7% | 1.7% | 1.7% | -1.1% | 1.2% | 1.2% | 1.2% | 1.2% |
| Base Fabric Machine Direction Change Rate Z2 | -5.0% | -4.9% | -6.0% | -6.1% | -7.1% | -6.6% | -6.5% | -5.5% |
| Post-processing Machine Direction Change Rate Z3 | 0.5% | 0.5% | 0.5% | 0.5% | 1.0% | 0.5% | 1.0% | 1.0% |
| Nonwoven Fabric Tentering Rate / Total Tentering Rate W1/(W1+W2+W3) | 0.56 | 0.61 | 0.46 | 0.49 | 0.58 | 0.36 | 0.75 | 0.67 |
| Content Proportion of High-Molecular Elastic Body | 30% | 30% | 30% | 20% | 35% | 30% | 30% | 30% |
| Breaking Elongation in Machine Direction | 83% | 88% | 86% | 81% | 92% | 88% | 83% | 86% |
| Breaking Elongation in Transverse Direction | 103% | 98% | 111% | 106% | 116% | 98% | 104% | 103% |
| Fiber Density in Machine Direction D2 (the number of fibers/mm$^2$) | 320 | 318 | 326 | 315 | 333 | 317 | 331 | 306 |
| Fiber Density in Transverse Direction D1 (the number of fibers/mm$^2$) | 268 | 286 | 232 | 278 | 254 | 277 | 266 | 306 |
| Fiber Density in Transverse /Machine Ratio D1/D2 | 0.84 | 0.90 | 0.71 | 0.88 | 0.76 | 0.87 | 0.80 | 1.00 |
| Constant Load Elongation in Machine Direction L2 | 5% | 5% | 5% | 6% | 4% | 5% | 5% | 5% |
| Constant Load Elongation in Transverse Direction L 1 | 14% | 12% | 17% | 16% | 13% | 14% | 13% | 11% |
| Constant Load Elongation in Transverse/Machine Ratio L1/L2 | 2.8 | 2.4 | 3.4 | 2.7 | 3.3 | 2.8 | 2.6 | 2.2 |
| Pilling Resistance | 5 | 5 | 5 | 4 | 5 | 5 | 5 | 4 |

| Kind of Fiber • Evaluation Items | Example 1 | Example 2 | Example 3 | Example 4 | Example 5 | Example 6 | Example 7 | Example 8 |
|---|---|---|---|---|---|---|---|---|
| Kind of Fiber | Filament | Filament | Filament | Filament | Filament | Filament | Filament | Filament |
| Appearance | VG | VG | VG | VG | VG | VG | VG | G |

Table 2

| Kind of Fiber • Evaluation Items | Comparative Example 1 | Comparative Example 2 | Comparative Example 3 |
|---|---|---|---|
| Kind of Fiber | Staple fiber | Filament | Filament |
| Nonwoven Fabric Tentering Rate W1 | *1 | 0.0% | 20.0% |
| Base Fabric Tentering Rate W2 | - | 5.0% | 3.5% |
| Post-processing Tentering Rate W3 | - | 3.0% | 3.3% |
| Nonwoven Fabric Machine Direction Change Rate Z1 | - | 1.1% | -0.6% |
| Base Fabric Machine Direction Change Rate Z2 | - | -8.6% | -5.6% |
| Post-processing Machine Direction Change Rate Z3 | - | 1.0% | 1.0% |
| Nonwoven Fabric Tentering Rate / Total Tentering Rate W1/(W1+W2+W3) | - | 0.00 | 0.75 |
| Content Proportion of High-Molecular Elastic Body | - | 30% | 30% |
| Breaking Elongation in Machine Direction | - | 80% | 83% |
| Breaking Elongation in Transverse Direction | - | 116% | 93% |
| Fiber Density in Machine Direction D2 (the number of fibers/mm$^2$) | - | 340 | 297 |
| Fiber Density in Transverse Direction D1 (the number of fibers/mm$^2$) | - | 206 | 343 |
| Fiber Density in Transverse /Machine Ratio D1/D2 | - | 0.61 | 1.15 |
| Constant Load Elongation in Machine Direction L2 | - | 5% | 5% |
| Constant Load Elongation in Transverse Direction L1 | - | 24% | 9% |
| Constant Load Elongation in Transverse/ Machine Ratio L1/L2 | - | 4.8 | 1.8 |
| Pilling Resistance | - | 5 | 3 |
| Appearance | - | VG | NG |
| * 1: It was impossible to set the tentering rate to 20% or less due to the spontaneous elongation. | | | |

As indicated in Table 1, it can be seen that the napped artificial leathers of Examples 1 to 8 satisfy the above conditions (1) and (2) and therefore, the constant load elongation transverse/machine ratio was 3.5 or less and the pilling resistance and the appearance were good. Incidentally, the napped artificial leathers of Examples 1 to 7 exhibited an excellent evaluation of the appearance as compared with the napped artificial leathers of Example 8.

On the other hand, as indicated in Table 2, in Comparative Example 1, the spontaneous elongation was caused during the preparation of the nonwoven fabric due to the use of the staple fibers, and both sides of the sheet during the preparation hung down. For removing these problems, it was necessary to set the tentering rate to at least more than 20%, and the productivity was remarkably lowered.

Incidentally, with respect to the napped artificial leather of Comparative Example 2, the tentering rate during the preparation of the nonwoven fabric was set to 0%, and therefore, the fiber density transverse/machine ratio was less than the lower limit of the range defined in the above condition (2). As a result thereof, the constant load elongation transverse/machine ratio was excessively larger than 3.5, and exhibited a value to a level causing a concern about the generation of wrinkles during the production of the napped artificial leather.

Further, with respect to the napped artificial leather of Comparative Example 3, the nonwoven fabric tentering rate W1 was set to 20%, and therefore, the fiber density transverse/machine ratio exceeded the upper limit of the range defined in the above condition (2). Therefore, it can be seen that the pilling resistance was lowered as compared with those of Examples, and the appearance was one unsuitable practically.

Industrial Applicability

According to the present invention, obtainable is a napped artificial leather which can restrain spontaneous elongation during the production process, enables setting the constant load elongation transverse/machine ratio to an appropriate value even without a scrim or a liner, and is excellent in pilling resistance and appearance. Therefore, it can be used suitably for automobile parts, information-processing equipment-related parts, household electric appliances-related parts, optical parts, luxury articles, or articles such as members for shoe.

Reference Signs List

10: web-entangled sheet
11: web-entangled sheet after tentering (nonwoven fabric)
12: web-entangled sheet where a polyurethane elastic body is filled and polyethylene is dissolved to thereby be removed
13: composite
14: napped raw material
15: napped artificial leather
P1, P2, P3: inlet width
Q1, Q2, Q3: outlet width
X: transverse direction
Y: machine direction

**Claims**

1. A napped artificial leather comprising: a nonwoven fabric, which is an entangled body of microfine fibers; and a high-molecular elastic body attached to the nonwoven fabric, the napped artificial leather having a napped surface formed by napping the microfine fiber on at least one surface, and satisfying the following conditions (1) and (2):

   (1) the nonwoven fabric comprises microfine polyester filaments, and
   (2) the fiber density D1 in the transverse direction is from 150 to 450 fibers/mm$^2$, the fiber density D2 in the machine direction is from 150 to 450 fibers/mm$^2$, and D1/D2 is from 0.7 to 1.1.

2. The napped artificial leather according to claim 1, further satisfying the following condition (3):
   (3) $0.3 \leq L1/L2 \leq 3.5$ where L1 is an elongation in the transverse direction at a constant load of 110.8N and L2 is an elongation in the machine direction at a constant load of 110.8N.

3. The napped artificial leather according to claim 1 or 2, wherein the high-molecular elastic body is included in an amount of from 15 to 40% by mass based on the total mass of the high-molecular elastic body and the nonwoven fabric.

4. The napped artificial leather according to any one of claims 1 to 3, wherein the breaking elongation in the machine direction, which is measured according to Method A in 8.14.1 of JIS L 1096 (1999), is 60% or more.

5. The napped artificial leather according to any one of claims 1 to 4, wherein the breaking elongation in the transverse direction, which is measured according to Method A in 8.14.1 of JIS L 1096 (1999), is 60% or more.

6. A method of producing a napped artificial leather according to any one of claims 1 to 5, comprising the following steps (i) to (iii):

(i) a step of preparing a nonwoven fabric, which comprises shrinking, in a hot water, a web-entangled sheet composed of a stacked body of fiber webs each obtained by melt spinning a polyester resin which is an island component and a second resin which is a sea component, and moving and drying the resultant, while tentering the resultant to widen the resultant in the direction perpendicular to the conveying direction,

(ii) a step of preparing a composite, which comprises impregnating the nonwoven fabric with a solution containing a high-molecular elastic body, solidifying the high-molecular elastic body, and then dissolving the second resin in a solution to remove the second resin, thereby preparing a composite where the high-molecular elastic body is attached to the nonwoven fabric,

(iii) a step of preparing a napped artificial leather, which comprises half-cutting the composite, and subjecting at least one surface of the obtained half-cut material to a grinding treatment, thereby preparing a napped artificial leather.

7. The method of producing a napped artificial leather according to claim 6, wherein the step (i) comprises shrinking the web-entangled sheet in a hot water, moving and drying the resultant, while tentering the resultant to widen the resultant in the direction perpendicular to the conveying direction such that the tentering rate W1 is from 6 to 17%, thereby preparing a heat-shrunk web-entangled sheet.

8. The method of producing a napped artificial leather according to claim 6 or 7, wherein the step (ii) comprises moving and drying the nonwoven fabric, while tentering the nonwoven fabric to widen the nonwoven fabric in the direction perpendicular to the conveying direction, thereby preparing the composite.

9. The method of producing a napped artificial leather according to claim 8, wherein the step (iii) comprises subjecting at least one surface of the half-cut material of the composite to a grinding treatment to prepare a napped raw material, and moving and heating the napped raw material, while tentering the napped raw material to widen the napped raw material in the direction perpendicular to the conveying direction, thereby obtaining the napped artificial leather.

10. The method of producing a napped artificial leather according to claim 9, wherein, the tentering rate W1 in the direction perpendicular to the conveying direction in the step (i), the tentering rate W2 in the direction perpendicular to the conveying direction in the step (ii), and the tentering rate W3 in the direction perpendicular to the conveying direction in the step (iii) satisfy $0.3 \leq W1/(W1 + W2 + W3) \leq 0.8$.

Fig. 1

Fig. 2

**INTERNATIONAL SEARCH REPORT**

| International application No. |
|---|
| **PCT/JP2022/044801** |

| A. | CLASSIFICATION OF SUBJECT MATTER |
|---|---|

*D06N 3/00*(2006.01)i; *B32B 5/02*(2006.01)i; *D04H 3/011*(2012.01)i; *D04H 3/016*(2012.01)i
FI: D06N3/00; B32B5/02 Z; D04H3/011; D04H3/016

According to International Patent Classification (IPC) or to both national classification and IPC

| B. | FIELDS SEARCHED |
|---|---|

Minimum documentation searched (classification system followed by classification symbols)

D06N1/00-7/06; D04H1/00-18/04; B32B1/00-43/00; D06B1/00-23/30;D06C3/00-29/00; D06G1/00-5/00; D06H1/00-7/24; D06J1/00-1/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2013-209780 A (KURARAY CO., LTD.) 10 October 2013 (2013-10-10) | 1-10 |
| A | JP 55-26261 A (MITSUBISHI RAYON CO., LTD.) 25 February 1980 (1980-02-25) | 1-10 |
| A | JP 54-55704 A (KYOWA LEATHER CLOTH CO., LTD.) 04 May 1979 (1979-05-04) | 1-10 |
| A | JP 2-191756 A (KURARAY CO., LTD.) 27 July 1990 (1990-07-27) | 1-10 |
| A | JP 2014-5564 A (KURARAY CO., LTD.) 16 January 2014 (2014-01-16) | 1-10 |
| A | JP 57-21576 A (TORAY IND., INC.) 04 February 1982 (1982-02-04) | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 February 2023** | **28 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/044801**

| Patent document cited in search report | | | Publication date (day/month/year) | Patent family member(s) | Publication date (day/month/year) |
|---|---|---|---|---|---|
| JP | 2013-209780 | A | 10 October 2013 | (Family: none) | |
| JP | 55-26261 | A | 25 February 1980 | (Family: none) | |
| JP | 54-55704 | A | 04 May 1979 | (Family: none) | |
| JP | 2-191756 | A | 27 July 1990 | (Family: none) | |
| JP | 2014-5564 | A | 16 January 2014 | (Family: none) | |
| JP | 57-21576 | A | 04 February 1982 | (Family: none) | |

Form PCT/ISA/210 (patent family annex) (January 2015)

**REFERENCES CITED IN THE DESCRIPTION**

**Patent documents cited in the description**

- JP 2013194327 A

- JP 2017137588 A